# EUROPEAN PATENT APPLICATION

(11) **EP 4 273 954 A1**
(43) Date of publication of application: **08.11.2023**
(21) Application number: 23169873.9
(22) Date of filing: 25.04.2023
(51) Int. Cl.: H01M 4/13, H01M 4/139, H01M 10/0585

(54) **ELECTRODE, ELECTRODE ASSEMBLY AND MANUFACTURING METHOD THEREOF**

(30) Priority: 02.05.2022 KR 20220054475
(71) Applicant: SK On Co., Ltd., Seoul 03161 (KR)
(72) Inventor: PARK, Sun Min, 34124 Daejeon (KR); KIM, Dong Ju, 34124 Daejeon (KR); KIM, Sang Mo, 34124 Daejeon (KR); BYUN, Jae Gyu, 34124 Daejeon (KR); SHIN, Seul Gi, 34124 Daejeon (KR); JEONG, Taek Eon, 34124 Daejeon (KR)
(74) Representative: Prüfer & Partner mbB Patentanwälte · Rechtsanwälte

(57) **Abstract**

Provided are an electrode comprising a coated portion that is coated with an active material; an uncoated portion that is not coated with the active material; and at least one selected from the group consisting of a first straight section formed by cutting out a part of the boundary region between the coated portion and the uncoated portion and a second straight section formed by cutting out an edge of the coated portion; an electrode assembly comprising the same; and a manufacturing method of the electrode assembly.

## Description

### BACKGROUND OF THE INVENTION

### 1. Field

The present disclosure relates to an electrode, an electrode assembly, and a manufacturing method thereof.

### 2. Description of the Related Art

With the development of the electric vehicle market, there is a demand for the production of batteries capable of allowing an electric vehicle to travel long distances on a single charge. To increase the driving range of an electric vehicle, the energy density of batteries should be high. Lithium secondary batteries exhibit a high energy density and thus are most suitably used as batteries for electric vehicles.

In particular, a lithium secondary battery comprises an electrode assembly as a unit cell, and an electrode assembly may be manufactured by a winding method or a stacking method according to the formation method of a cathode, an anode, and a separator. When an electrode assembly is manufactured by a winding method, alignment accuracy of a cathode and an anode is decreased, resulting in a number of battery defects. In addition, due to the tension difference between a bent portion and a straight portion during winding, a cathode active material or an anode active material is exfoliated, resulting in the twisting of an electrode assembly.

In order to compensate for the problems of a winding method, a stacking method has been introduced in which a plurality of cathode and anode units are sequentially stacked to manufacture an electrode assembly. However, since the boundary surface between an uncoated portion and a coated portion of a current collector wrinkles, accurate alignment of cathodes and anodes is difficult. Therefore, there is a demand for a technology for performing accurate alignment in a stacking method for manufacturing an electrode assembly.

### SUMMARY OF THE INVENTION

The present disclosure relates to an electrode, an electrode assembly, and a manufacturing method thereof for performing accurate alignment in a stacking process by using an electrode comprising at least one selected from the group consisting of a first straight section formed by cutting out a part of the boundary region between a coated portion that is coated with an active material and a uncoated portion that is not coated with an active material; and a second straight section formed by cutting out an edge of the coated area that is coated with an active material.

An electrode according to the present disclosure may comprise a coated portion that is coated with an active material; an uncoated portion that is not coated with the active material; and at least one selected from the group consisting of a first straight section formed by cutting out a part of the boundary region between the coated portion and the uncoated portion and a second straight section formed by cutting out an edge of the coated portion.

According to an Example, the first straight section may comprise at least one selected from the group consisting of a 1-1 straight section having a predetermined length in a direction from one end of the coated portion to the center of the coated portion that is set to be perpendicular to the boundary region; and a 1-2 straight section having a predetermined length in a direction from the other end of the coated portion to the center of the coated portion.

According to an Example, the length of each of the 1-1 straight section and the 1-2 straight section may be 2 mm or longer.

According to an Example, the coated portion may comprise a first edge portion adjacent to the boundary region with the uncoated portion; and a second edge portion spaced apart from the boundary region with the uncoated portion, and the second straight section may comprise at least one selected from the group consisting a 2-1 straight section and a 2-2 straight section formed by cutting out the first edge portion.

According to an Example, the length of each of the 2-1 straight section and the 2-2 straight section may be 2 mm or longer.

According to an Example, the length of a side where the coated portion and the uncoated portion come into contact may be longer than the length of a side opposing the same.

An electrode assembly according to the present disclosure may comprise an electrode and a separator of the present disclosure.

According to an Example, the electrode comprises a cathode or an anode, and the separator may be interposed between the cathode and the anode. According to an Example, the electrode comprises a cathode and an anode.

According to an Example, the electrode assembly may be one in which the cathode and the anode are alternately stacked.

According to an Example, a first straight section formed on the cathode or anode may be aligned in a stacking direction.

According to an Example, a second straight section formed on the cathode or anode may be aligned in a stacking direction.

A manufacturing method of an electrode assembly according to the present disclosure may comprise (a) applying an active material to one or both surfaces of a current collector to prepare a plurality of electrodes comprising a coated portion that is coated with the active material and a non-coated portion that is not coated with the active material; (b) forming a first straight section by cutting out a part of the boundary region between the coated portion and the uncoated portion, forming a second straight section by cutting out an edge of the coated portion, or forming the first straight section and the second straight section by cutting out a part of the boundary region and an edge; and (c) stacking the plurality of electrodes while confirming alignment of the plurality of electrodes through the first straight section or the second straight section.

According to an Example, the first straight section in (b) above may comprise at least one selected from the group consisting of a 1-1 straight section having a predetermined length in a direction from one end of the coated portion to the center of the coated portion that is set to be perpendicular to the boundary region; and a 1-2 straight section having a predetermined length in a direction from the other end of the coated portion to the center of the coated portion.

According to an Example, the length of each of the 1-1 straight section and the 1-2 straight section may be 2 mm or longer.

According to an Example, the coated portion may comprise a first edge portion adjacent to the boundary region with the uncoated portion; and a second edge portion spaced apart from the boundary region with the uncoated portion, and the second straight section in (b) above may comprise at least one selected from the group consisting a 2-1 straight section and a 2-2 straight section formed by cutting out the first edge portion.

According to an Example, the length of each of the 2-1 straight section and the 2-2 straight section may be 2 mm or longer.

According to an Example, (c) above may further comprise interposing a separator between the plurality of electrodes.

As described above, since the electrode, the electrode assembly and the manufacturing method thereof according to the present disclosure comprise a coated portion that is coated with an active material; an uncoated portion that is not coated with the active material; and at least one selected from the group consisting of a first straight section formed by cutting out a part of the boundary region of the coated portion and the uncoated portion and a second straight section formed by cutting out an edge of the coated portion, there is an effect of securing an alignment reference point of electrodes in a stacking process.

In addition, since the electrode, the electrode assembly, and the manufacturing method thereof according to the present disclosure can improve the accuracy of alignment in the stacking process, there is an effect that battery performance is maintained for a long time, the manufacturing process of the electrode assembly is simplified, and mass productivity is improved.

In addition, the electrode, the electrode assembly, and the manufacturing method according to the present disclosure have an effect that reliability of the manufacturing process is secured and mass production of batteries with excellent performance can be carried out, even though the area of an uncoated portion is increased to reduce the electrode resistance in an uncoated portion, because the alignment accuracy of electrodes is improved in the stacking process.

### BRIEF DESCRIPTION OF THE DRAWINGS

FIG. 1 is a schematic illustration of a conventional electrode structure.
FIG. 2 is a schematic illustration of an electrode structure of the present disclosure in which a first straight section is form.
FIG. 3 is an enlarged view of a first straight line section of the electrode of FIG. 2.
FIG. 4 is a schematic illustration of an electrode structure of the present disclosure in which a second straight section is form.
FIG. 5 is an enlarged view of a first edge portion of the electrode of FIG. 4.
FIG. 6 is a schematic illustration of electrode structures according to other Examples of the present disclosure.
FIG. 7 is an enlarged view of the structure of the electrode of FIG. 6B.

### DETAILED DESCRIPTION

Structural or functional descriptions of Examples disclosed in the present specification or application are merely illustrated for the purpose of describing Examples according to the technical principle of the present disclosure. In addition, Examples according to the technical principle of the present disclosure may be implemented in various forms other than the Examples disclosed in the present specification or application. In addition, the technical principle of the present disclosure is not to be construed as being limited to the Examples described in this specification or application.

Hereinafter, the present disclosure will be described in detail.

Generally, a battery comprises, as a unit cell, an electrode assembly comprising an electrode and a separator, and an electrode comprises a coated portion that is coated with an active material and an uncoated portion that is not coated with the active material. When a battery having such a structure is used for a long time, a current flow may be bent at the uncoated portion of the electrode. In addition, the voltage and current density may increase at the electrode tab due to spreading resistance and constriction resistance, and heat generation may occur, thereby shortening the lifetime of the battery.

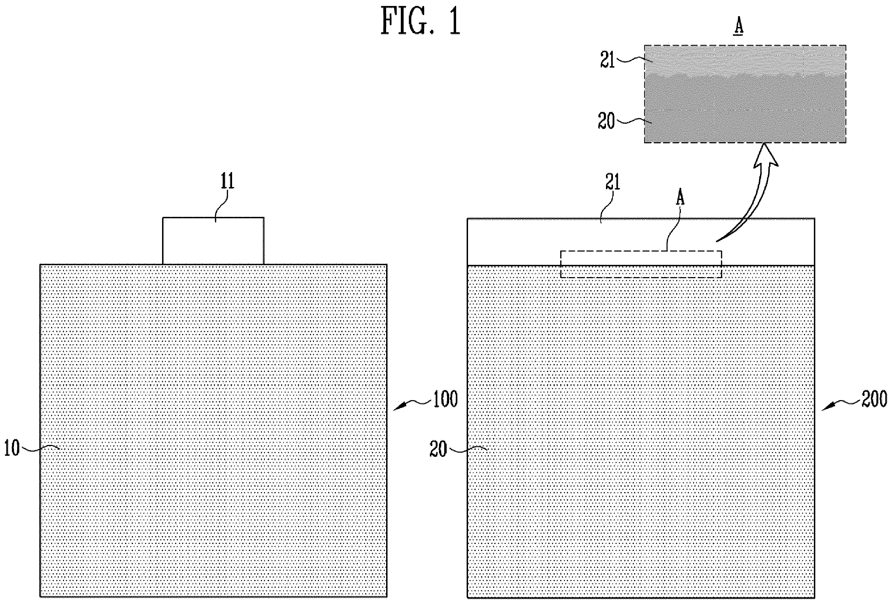

FIG. 1 is a schematic illustration of a conventional electrode structure. Referring to FIG. 1, a first electrode 100 and a second electrode 200 comprise coated portions 10, 20 that are coated with an active material and uncoated portions 11, 21 that are not coated with an active material. An uncoated portion 21 having a long-width shape is introduced to a second electrode 200 to reduce the bending of a current flow in an uncoated portion 11 of a first electrode 100.

However, the boundary region between a coated portion 20 that is coated with an active material and an uncoated portion 21 exhibits a non-uniform shape A, and as the width of an uncoated portion 21 increases, the boundary region having a non-uniform shape between a coated portion 20 and an uncoated portion 21 increases. For this reason, when an electrode assembly is manufactured by stacking electrodes, the alignment accuracy of electrodes is lowered, thereby increasing the defective rate of batteries comprising an electrode assembly.

The electrode according to the present disclosure may comprise a coated portion that is coated with an active material; an uncoated portion that is not coated with an active material; and at least one selected from the group consisting of a first straight section formed by cutting out a part of the boundary region between the coated portion and the uncoated portion and a second straight section formed by cutting out an edge of the coated portion. Through this, accurate alignment can be performed in a stacking process, and the performance of batteries can be improved by solving the problems described above.

An electrode according to the present disclosure comprises a coated portion that is coated with an active material and an uncoated portion that is not coated with an active material.

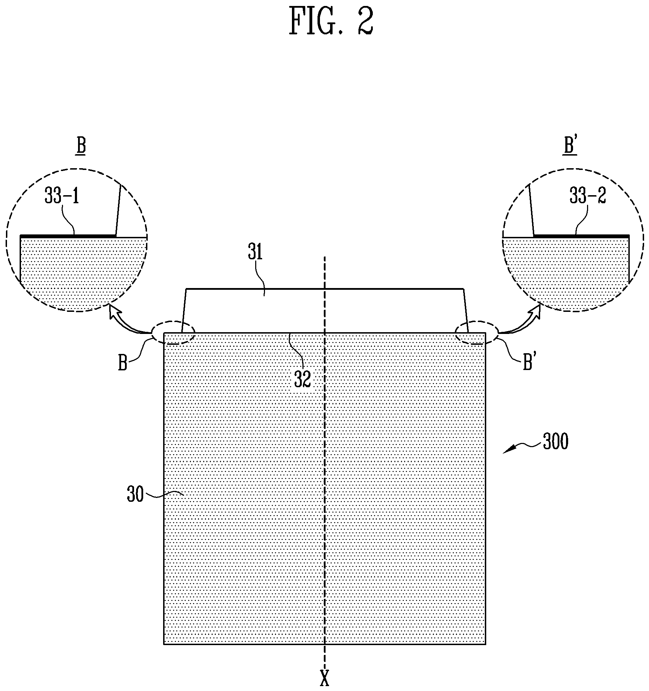

FIGS. 2 to 5 are schematic illustrations of an electrode structure according to the present disclosure. Referring to FIG. 2, an electrode 300 comprises a coated portion 30 that is coated with an active material and an uncoated portion 31 that is not coated with an active material.

An electrode 300 may be a cathode or an anode for a secondary battery. A coated portion 30 and an uncoated portion 31 may be formed based on a current collector, and a current collector may comprise a known conductive material within a range that does not cause a chemical reaction in a secondary battery. For example, a current collector may comprise at least one selected from the group consisting of stainless steel, nickel (Ni), aluminum (Al), titanium (Ti), copper (Cu), and alloys thereof, and may be provided in various forms such as film, sheet, or foil.

A coated portion 30 comprises an active material, and when an electrode 300 is used as a cathode, a coated portion 30 may comprise a cathode active material. A cathode active material may be a material into which lithium (Li) ions can be intercalated and deintercalated. A cathode active material may be a lithium metal oxide. For example, a cathode active material may be at least one selected from the group consisting of a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, but is not necessarily limited to a specific example.

When an electrode 300 is used as an anode, a coated portion 30 may comprise an anode active material. An anode active material may be a material capable of intercalating and deintercalating lithium ions. For example, an anode active material may be at least one selected from the group consisting of a carbon-based material, such as crystalline carbon, amorphous carbon, carbon composite, and carbon fiber, a lithium alloy, silicon (Si), and tin (Sn). According to an Example, an anode electrode active material may be natural graphite or artificial graphite, but is not limited to a specific example.

A coated portion 30 may further comprise a binder and a conductive material. A binder can improve mechanical stability by mediating a bond between a current collector and an active material. For example, a binder may be an organic binder or an aqueous binder, and may be used together with a thickening agent such as carboxymethyl cellulose (CMC). More specifically, an organic binder may comprise at least one selected from the group consisting of vinylidene fluoride-hexafluoropropylene copolymer (PVDF-co-HFP), polyvinylidene fluoride (PVDF), polyacrylonitrile, and polymethyl methacrylate. In addition, an aqueous binder may be styrene-butadiene rubber (SBR), but is not limited to a specific example.

A conductive material can improve the electrical conductivity of a secondary battery. A conductive material may comprise a metal-based material. For example, a conductive material may comprise a conventional carbon-based conductive material. More specifically, a conductive material may comprise at least one selected from the group consisting of graphite, carbon black, graphene, and carbon nanotube. Preferably, a conductive material may comprise carbon nanotube, but is not limited to a specific example.

An electrode according to the present disclosure may comprise at least one selected from the group consisting of a first straight section formed by cutting out a part of the boundary region of a coated portion and an uncoated portion; and a second straight section formed by cutting out an edge of the coated portion.

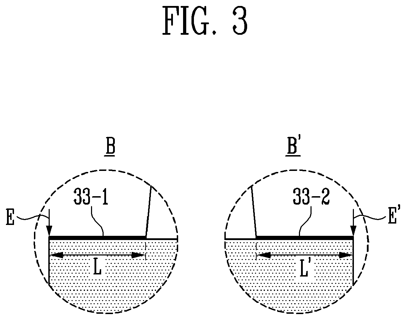

Referring to FIGS. 2 and 3, an electrode 300 comprises first straight sections 33-1, 33-2 formed by cutting out a part of the boundary region 32 between a coated portion 30 and an uncoated portion 31.

First straight sections 33-1, 33-2 may comprise at least one selected from the group consisting a 1-1 straight section 33-1 having a predetermined length L in a direction from one end E of a coated portion 30 to the center of a coated portion that is set to be perpendicular X to the boundary region 32; and a 1-2 straight section 33-2 having a predetermined length L' in a direction from the other end E' of a coated portion 30 to the center of a coated portion 30.

FIG. 2 shows first straight sections 33-1, 33-2 formed by cutting out both sides of the boundary region 32 between a coated portion 30 and an uncoated portion 31, but is not limited thereto. In another example, one side of the boundary region 32 between a coated portion 30 and an uncoated portion 31 may be cut out to form a 1-1 straight section 33-1 or a 1-2 straight section 33-2, or both sides of the boundary region 32 between a coated portion 30 and an uncoated portion 31 may be cut out to form both a 1-1 straight section 33-1 and a 1-2 straight section 33-2.

First straight sections 33-1, 33-2 may be formed by cutting a part of the boundary region 32 between a coated portion 30 and an uncoated portion 31 with a knife or laser, or by cutting out with a press. A part of the boundary region between a coated portion and an uncoated portion may be cut out to form a straight section so that a reference point for alignment of electrodes may be secured in a stacking process of manufacturing an electrode assembly by stacking electrodes. In addition, even if a non-uniform boundary region between a coated portion and an uncoated portion increases according to the change of the shape of an uncoated portion of an electrode, alignment accuracy of electrodes may be improved. This may simplify the manufacturing process of a battery assembly, improve mass production, and maintain battery performance for a long time.

Referring to FIG. 3, the length L of a 1-1 straight section 33-1 and the length L' of a 1-2 straight section 33-2 may be the same or different. The length of each of a 1-1 straight section 33-1 and a 1-2 straight section 33-2 may be 2 mm or longer, 3 mm or longer, or 5 mm or longer. When the abovementioned length is satisfied, even if a non-uniform boundary region between a coated portion and an uncoated portion increases due to an increase of the area of an uncoated portion, alignment accuracy of electrodes may be improved in the stacking process. This may ensure the reliability of the manufacturing process and allow mass production of batteries with excellent performance.

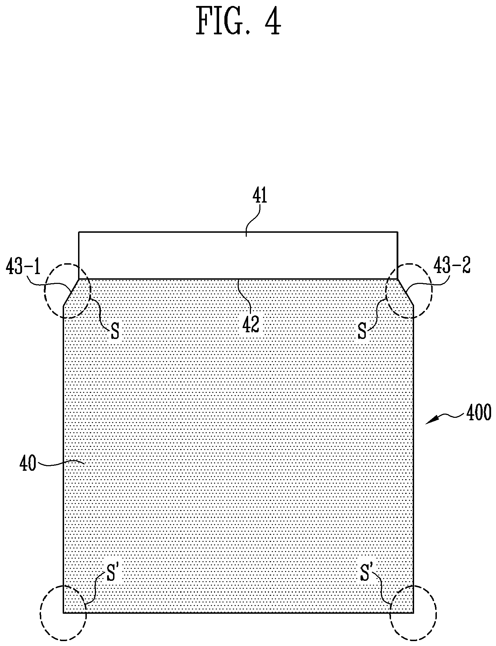

Referring to FIG. 4, an electrode 400 comprises second straight sections 43-1, 43-2 formed by cutting out an edge of a coated portion 40.

A coated portion 40 may comprise a first edge portion S adjacent to the boundary region 42 with an uncoated portion 41; and a second corner portion S' spaced apart from the boundary region 42 with an uncoated portion 41. In addition, second straight sections 43-1, 43-2 may comprise at least one more selected from the group consisting of a 2-1 straight section 43-1 formed by cutting out a first edge portion S; and a 2-2 straight section 43-2.

FIG. 4 shows second straight sections 43-1, 43-2 formed by cutting out both sides of a first corner portion S of a coated portion 40, but is not limited thereto. In another example, one side of a first edge portion may be cut out to form a 2-1 straight section 43-1 or a 2-2 straight section 43-2, or both sides of a first edge may be cut out to form both a 2-1 straight section 43-1 and a 2-2 straight section 43-2.

Second straight sections 43-1 and 43-2 may be formed by cutting the first edge portion S of the coated portion 40 with a knife or a laser or by cutting out with a press. An edge portion of a coated portion may be cut out to form a straight section so that a reference point for alignment of electrodes may be secured in a stacking process of manufacturing an electrode assembly by stacking electrodes. In addition, even if a non-uniform boundary region between a coated portion and an uncoated portion increases according to the change of the shape of an uncoated portion of an electrode, alignment accuracy of electrodes may be improved. This may simplify the manufacturing process of a battery assembly, improve mass production, and maintain battery performance for a long time.

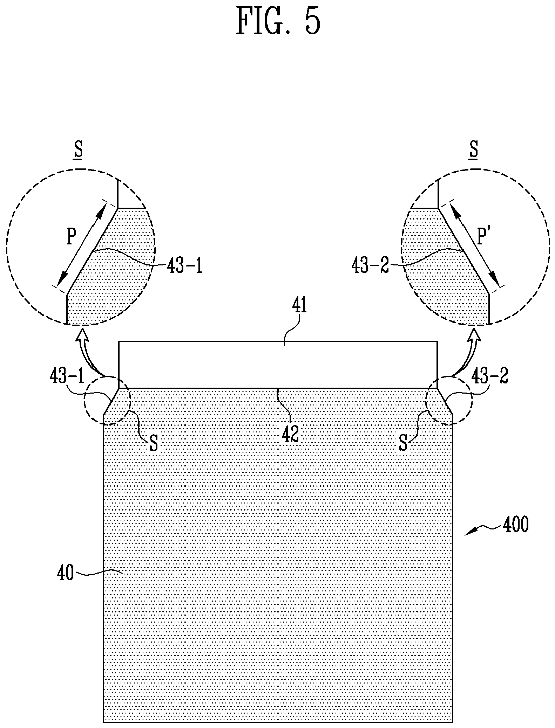

Referring to FIG. 5, a first edge portion S may comprise a 2-1 straight section 43-1 and a 2-2 straight section 4-3, and the length P of a 2-1 straight section 43-1 and the length P' of a 2-2 straight section 43-2 may be the same or different. The length of each of a 2-1 straight section 43-1 and a 2-2 straight section 43-2 may be 2 mm or longer, 3 mm or longer, or 5 mm or longer. When the abovementioned length is satisfied, even if a non-uniform boundary region between a coated portion and an uncoated portion increases due to an increase of the area of an uncoated portion, alignment accuracy of electrodes may be improved in the stacking process. This may ensure the reliability of the manufacturing process and allow mass production of batteries with excellent performance.

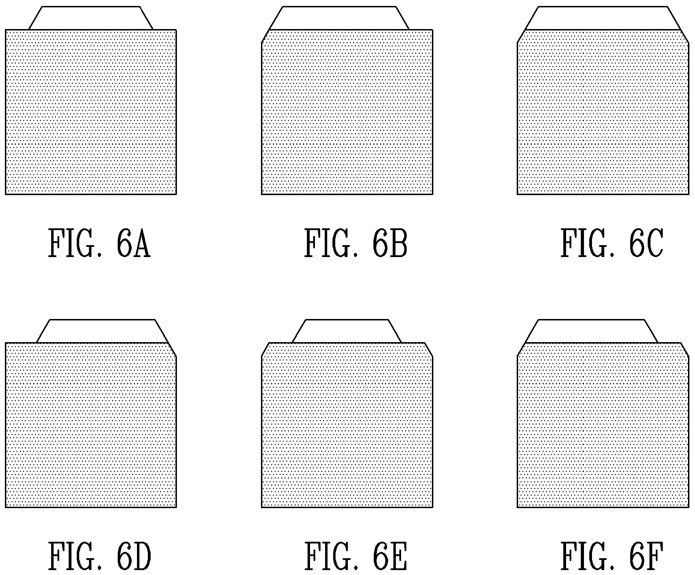

FIG. 6 shows a specific example of an electrode structure comprising at least one selected from the group consisting of a first straight section and a second straight section of the present disclosure.

Referring to FIG. 6, an electrode of FIG.6A has a structure comprising a first straight line section formed by cutting out both sides of the boundary area between a coated portion and an uncoated portion, and an electrode of FIG.6C has a structure comprising a second straight section formed by cutting out an edge of a coated portion. In addition, each electrode of FIGs.6B, D, E and F has a structure comprising a first straight section and a second straight section. FIG. 6 shows examples of an electrode structure comprising at least one selected from the group consisting of a first straight section and a second straight section of the present disclosure, and an electrode structure according to the present disclosure is not limited to the electrode structure shown in FIG. 6.

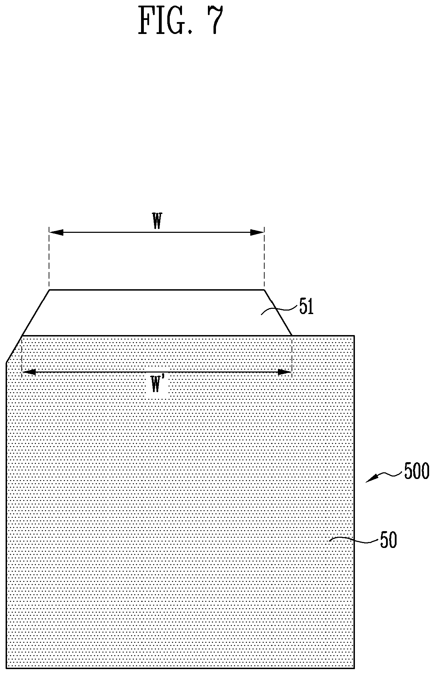

FIG. 7 is an enlarged view of an electrode structure of an electrode of FIG. 6B.

Referring to FIG. 7, in an electrode 500, the length W' of the side where a coated portion 50 and an uncoated portion 51 come into contact may be longer than the length (W) of the side opposite thereto. As an uncoated portion exhibits the shape described above, the bending of a current flow in an uncoated portion may be alleviated, thereby improving a current flow and reducing diffusion spreading resistance and constriction resistance. In addition, as the resistance decreases, the voltage density and the current density applied to an electrode tab decrease, and the heat generation from an electrode tab during charging and discharging of the battery decreases, thereby improving the lifetime of a battery. In addition, an electrode according to the present disclosure may comprise at least one selected from the group consisting of a first straight section formed by cutting out a part of the boundary region of a coated portion and an uncoated portion and a second straight section formed by cutting out an edge of the coated portion. Therefore, even if the width of an uncoated region is increased, alignment accuracy of electrodes can be improved, and the reliability of the stacking process can be secured.

An electrode assembly according to the present disclosure comprises an electrode and a separator of the present disclosure.

An electrode comprises a cathode or an anode, and a separator may be interposed between the cathode and the anode.

A separator is configured to prevent an electrical short circuit between a cathode and an anode and to generate a flow of ions. A separator may comprise a porous polymer film or a porous non-woven fabric. Here, a porous polymer film may be configured as a single layer or multiple layers comprising polyolefin-based polymers such as an ethylene polymer, a propylene polymer, an ethylene/butene copolymer, an ethylene/hexene copolymer, and an ethylene/methacrylate copolymer. A porous nonwoven fabric may comprise glass fibers or polyethylene terephthalate fibers having a high melting point. However, it is not limited thereto, and according to Examples, a separator may be a highly heat-resisting ceramic coated separator (CCS) comprising ceramic.

An electrode assembly may be stacked as cathodes and anodes are alternately stacked. In addition, a first straight section formed on the cathode or anode may be aligned in a stacking direction. In addition, in an electrode assembly, a second straight section formed on the cathode or the anode may be aligned in a stacking direction. In the conventional stacking process, the boundary region of a coated portion and uncoated portion of the cathode and anode exhibits a non-uniform shape, resulting in a problem of lowering alignment accuracy in the cathode and anode stacking process. To solve this problem, the electrode assembly according to the present disclosure secures a straight section formed on a cathode and an anode as an alignment reference point to stack a cathode and an anode, thereby improving alignment accuracy of a cathode and an anode. In this way, the reliability of an electrode assembly manufactured by a stacking process can be secured.

An electrode assembly may be included in a case together with an electrolyte and manufactured as a secondary battery. An electrolyte may be a non-aqueous electrolyte. An electrolyte may comprise a lithium salt and an organic solvent. An organic solvent may comprise at least one selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

A manufacturing method of an electrode assembly according to the present disclosure comprises: (a) applying an active material to one or both surfaces of a current collector to prepare a plurality of electrodes comprising a coated portion that is coated with the active material and an uncoated portion that is not coated with the active material; (b) forming a first straight section by cutting out a part of the boundary region between the coated portion and the uncoated portion, forming a second straight section by cutting out an edge of the coated portion, or forming the first straight section and the second straight section by cutting out a part of the boundary region and an edge; and (c) stacking the plurality of electrodes while confirming alignment of the plurality of electrodes through the first straight section or the second straight section.

The manufacturing method according to the present disclosure comprises (a) applying an active material to one or both surfaces of a current collector to prepare a plurality of electrodes comprising a coated portion that is coated with the active material and an uncoated portion that is not coated with the active material.

In (a), a slurry in which an active material, a binder, a conductive material, and a solvent are mixed may be applied to one or both surfaces of a current collector, and then dried to manufacture a plurality of electrodes comprising a coated portion and an uncoated portion.

A drying process may be performed by heat, a blower, a fan, or natural drying at room temperature. A solvent included in a slurry may be volatilized, and a coated portion comprising an active material, a binder, and a conductive material may be formed on a current collector by a drying process.

The types of an active material, a binder, and a conductive material are the same as the types of the active material, binder, and conductive material previously described about an electrode according to the present disclosure. The type of solvent is not particularly limited, but a solvent is miscible with an active material, a binder, and a conductive material, and may comprise NMP (N-Methyl Pyrrolidone).

The manufacturing method according to the present disclosure comprises (b) forming a first straight section by cutting out a part of the boundary region between the coated portion and the uncoated portion, forming a second straight section by cutting out an edge of the coated portion, or forming the first straight section and the second straight section by cutting out a part of the boundary region and an edge.

A first straight section may comprise at least one selected from the group consisting of a 1-1 straight section having a predetermined length in a direction from one end of the coated portion to the center of the coated portion that is set to be perpendicular to the boundary region; and a 1-2 straight section having a predetermined length in a direction from the other end of the coated portion to the center of the coated portion.

The coated portion may comprise a first edge portion adjacent to the boundary region with an uncoated portion; and a second edge portion spaced apart from the boundary region with an uncoated portion, and the second straight section in (b) may comprise at least one selected from the group consisting a 2-1 straight section and a 2-2 straight section formed by cutting out the first edge portion.

After stacking a plurality of electrodes, a first straight section may be formed by cutting a part of the boundary region between a coated portion and an uncoated portion with a knife or laser or the like or by cutting out with a press. After stacking a plurality of electrodes, a second straight section may be formed by cutting a part of an edge portion of a coated portion adjacent to the boundary region with an uncoated portion with a knife or laser or the like or by cutting out with a press.

The length of each of a 1-1 straight section, a 1-2 straight section, a 2-1 straight section, and a 2-2 straight section may be formed to be 2 mm or longer, 3 mm or longer, or 5 mm or longer. When the abovementioned length is satisfied, alignment accuracy of electrodes may be improved in the stacking process. This may ensure the reliability of the manufacturing process and allow mass production of batteries with excellent performance.

The manufacturing method according to the present disclosure comprises (c) stacking the plurality of electrodes while confirming alignment of the plurality of electrodes through the first straight section or the second straight section.

In (c), alignment of a plurality of electrodes may be confirmed visually or by an optical sensor with reference to a straight section formed on the plurality of electrodes. For example, whether straight sections formed on a plurality of electrodes coincide is confirmed visually or by an optical sensor, and when the straight sections are dislocated, the plurality of straight sections may be realigned so that the straight sections of the plurality of electrodes may coincide. In this way, the manufacturing method according to the present disclosure allows easy confirming of the alignment of a plurality of electrodes, and thus has an advantage that reliability of the stacking process can be secured.

In (c), interposing a separator between the plurality of electrodes may further be included. A separator may be configured to prevent an electrical short circuit between a cathode and an anode and to generate a flow of ions. The type of a separator is the same as the type of a separator previously described about the electrode according to the present disclosure. After a straight section is formed on a plurality of electrodes, a separator may be interposed between a cathode and an anode on which a straight section is formed. Afterward, alignment of a plurality of electrodes may be confirmed through straight sections of a cathode and an anode in an electrode assembly in which a cathode, an anode, and a separator are stacked.

## Claims

1. An electrode comprising a coated portion (30, 40, 50) that is coated with an active material;
an uncoated portion (31, 41, 51) that is not coated with the active material; and
at least one selected from the group consisting of a first straight section (33-1. 33-2) formed by cutting out a part of the boundary region between the coated portion (30, 40, 50) and the uncoated portion (31, 41, 51) and a second straight section (43-1, 43-2) formed by cutting out an edge of the coated portion (30, 40, 50).

2. The electrode according to claim 1, wherein the first straight section (33-1. 33-2) comprises at least one selected from the group consisting of a 1-1 straight section (33-1) having a predetermined length in a direction from one end of the coated portion (30, 40, 50) to the center of the coated portion (30, 40, 50) that is set to be perpendicular to the boundary region; and a 1-2 straight section (33-2) having a predetermined length in a direction from the other end of the coated portion (30, 40, 50) to the center of the coated portion (30, 40, 50).

3. The electrode according to claim 2, wherein the length of each of the 1-1 straight section (33-1) and the 1-2 straight section (33-2) is 2 mm or longer.

4. The electrode according to anyone of the preceding claims, wherein the coated portion (30, 40, 50) comprises a first edge portion (S) adjacent to the boundary region with the uncoated portion (31, 41, 51); and a second edge portion (S') spaced apart from the boundary region with the uncoated portion (31, 41, 51), and the second straight section (43-1, 43-2) comprises at least one selected from the group consisting a 2-1 straight section (43-1) and a 2-2 straight section (43-2) formed by cutting out the first edge portion (S).

5. The electrode according to claim 4, wherein the length of each of the 2-1 straight section (43-1) and the 2-2 straight section (43-2) may be 2 mm or longer.

6. The electrode according to anyone of the preceding claims, wherein the length of a side where the coated portion (30, 40, 50) and the uncoated portion (31, 41, 51) come into contact is longer than the length of a side opposing the same.

7. An electrode assembly comprising an electrode and a separator according to anyone of the preceding claims.

8. The electrode assembly according to claim 7, wherein the electrode comprises a cathode or an anode, and the separator is interposed between the cathode and the anode.

9. The electrode assembly according to claim 8, wherein the electrode assembly may be one in which the cathode and the anode are alternately stacked or,
wherein a first straight section (33-1. 33-2) formed on the cathode or anode is aligned in a stacking direction, or
wherein a second straight section (43-1, 43-2) formed on the cathode or anode is aligned in a stacking direction.

10. A manufacturing method of an electrode assembly, the method comprising: (a) applying an active material to one or both surfaces of a current collector to prepare a plurality of electrodes comprising a coated portion (30, 40, 50) that is coated with the active material and a non-coated portion (30, 40, 50) that is not coated with the active material; (b) forming a first straight section (33-1. 33-2) by cutting out a part of the boundary region between the coated portion (30, 40, 50) and the uncoated portion (31, 41, 51), forming a second straight section (43-1, 43-2) by cutting out an edge of the coated portion (30, 40, 50), or forming the first straight section (33-1. 33-2) and the second straight section (43-1, 43-2) by cutting out a part of the boundary region and an edge; and (c) stacking the plurality of electrodes while confirming alignment of the plurality of electrodes through the first straight section (33-1. 33-2) or the second straight section (43-1, 43-2).

11. The manufacturing method of an electrode assembly according to claim 10, wherein the first straight section (33-1. 33-2) in (b) above comprises at least one selected from the group consisting of a 1-1 straight section having a predetermined length in a direction from one end of the coated portion (30, 40, 50) to the center of the coated portion (30, 40, 50) that is set to be perpendicular to the boundary region; and a 1-2 straight section having a predetermined length in a direction from the other end of the coated portion (30, 40, 50) to the center of the coated portion (30, 40, 50).

12. The manufacturing method of an electrode assembly according to claim 11, wherein the length of each of the 1-1 straight section (33-1) and the 1-2 straight section (33-2) may be 2 mm or longer.

13. The manufacturing method of an electrode assembly according to anyone of claims 10 to 12, wherein the coated portion (30, 40, 50) comprises a first edge portion (S) adjacent to the boundary region with the uncoated portion (31, 41, 51); and a second edge portion (S') spaced apart from the boundary region with the uncoated portion (31, 41, 51), and the second straight section (43-1, 43-2) in (b) above comprises at least one selected from the group consisting a 2-1 straight section (43-1) and a 2-2 straight section (43-2) formed by cutting out the first edge portion (S).

14. The manufacturing method of an electrode assembly according to claim 13, wherein the length of each of the 2-1 straight section (43-1) and the 2-2 straight section (43-2) is 2 mm or longer.

15. The manufacturing method of an electrode assembly according to anyone of claims 10 to 14, wherein (c) above further comprises interposing a separator between the plurality of electrodes.
